# EUROPÄISCHE PATENTSCHRIFT

(11) **EP 3 456 195 B1**
(45) Veröffentlichungstag und Bekanntmachung des Hinweises auf die Patenterteilung: **28.10.2020**
(21) Anmeldenummer: 18193748.3
(22) Anmeldetag: 11.09.2018
(51) Int. Cl.: A01M 3/02

(54) **FLIEGENKLATSCHE**
FLY SWATTER
TAPETTE À MOUCHES

(30) Priorität: 19.09.2017 DE 102017121734
(43) Veröffentlichungstag der Anmeldung: 20.03.2019
(73) Patentinhaber: Innovative Motion GmbH, 13599 Berlin (DE)
(72) Erfinder: Leberer, Thomas, 13599 Berlin (DE)
(74) Vertreter: Weisse, Renate

(56) Entgegenhaltungen:
- EP-A1- 0 059 885
- CN-A- 104 542 534
- US-A- 1 457 674
- US-A- 1 515 158
- US-A- 1 639 292
- US-A- 1 861 688
- US-A- 2 189 360
- US-A- 4 974 360
- US-A- 5 377 446
- US-A1- 2006 032 112

## Beschreibung

### Technisches Gebiet

Die Erfindung betrifft eine Fliegenklatsche mit den Merkmalen des Anspruchs 1.

Mit einer Fliegenklatsche können belästigende Fliegen, Mücken und andere Insekten getötet werden. Einfache Fliegenklatschen haben einen langstieligen Griff und eine Fläche an einem Schlaggitter, welche auf das Insekt gehauen werden. Nachteilig ist es, dass das Insekt die kommende Gefahr, beispielsweise durch Bewegung oder Luftzug, erkennt und davonfliegt. Es ist also wichtig, dass weder die Person mit der Klatsche, noch die Klatsche selber zu früh erkannt werden und dass eine schnelle Bewegung ausgeführt wird, damit das Insekt keine Zeit zur Flucht hat.

### Stand der Technik

DE 296 20 891 U1 offenbart eine Fliegenklatschenpistole, bei der ein Schlagbolzen mit der Trefferfläche durch eine Druckfeder nach Loslassen eines Spannhebels herausgeschleudert wird.

EP 0461 397 B1 offenbart eine Fliegenklatsche mit einem gitterförmigen Teller, der an einen langgestreckten Griff angelenkt ist. In einer geöffneten Ruhestellung ist der Teller federbelastet.

DE 254165 offenbart eine pistolenartige Vorrichtung zum Töten von Insekten, bei welcher zwei miteinander verbundene, in der Fangstelung maulartig auseinandergehaltene Metallstreifen beim Auslösen einer Abzugseinrichtung zum Zusammenklappen gebracht werden.

Die genannten Anordnungen bestehen aus verschiedenen Materialien und sind kompliziert aufgebaut. Die Herstellung ist daher teuer und die Anordnungen sind anfällig.

DE 324235 offenbart eine nach Art einer Schlagklappe wirkende Fliegenfalle zum Fangen und Vernichten von Insekten, bei der ein schleifenförmiger, federnder Schläger im Ruhezustand derart über einem Abzug festgehalten wird, dass er beim Druck auf den Abzug nach vorn schlägt. Der Schläger ist an einem pistolenartigen Griff befestigt. Der Schläger ist aus einem Draht geformt, wobei ein gitterförmiger vorderer Teil an einem Hebel sitzt, der an seinem freien Ende eine Feder aufweist. Die Feder ist also durch den Hebel von dem gitterförmigen vorderen Teil getrennt. Dadurch wird die Anordnung in vorgespanntem Zustand stark gebogen und der Schläger muss einen vergleichsweise langen Weg zurücklegen, bevor er auf der Schlagstelle auftrifft. Entsprechend besteht die Gefahr, dass das Insekt die Bewegung bemerkt und flüchtet.

Weitere relevante Veröffentlichungen im Bereich Fliegenklatsche sind US 4 974 360 A, US 1 861 688 A, US 2 189 360 A, US 1 639 292 A, US 1 515 158 A, US 2006/032112 A1, US 1 457 674 A, EP 0059 885 A1, US 5 377 446 A und CN 104 542 534 A.

### Offenbarung der Erfindung

Es ist Aufgabe der Erfindung, eine Vorrichtung der eingangs genannten Art zu schaffen, bei der das Insekt möglichst spät eine Gefahr erkennt und die einfach und kostengünstig herstellbar ist.

Erfindungsgemäß wird die Aufgabe gelöst durch eine Anordnung mit den kennzeichnenden Merkmalen des Anspruchs 1.

Auf diese Weise ist die Hand, welche den Auslöser betätigt beabstandet zum Insekt und das Insekt nimmt die Bewegung nicht gleich wahr. Gleichzeitig ist die Anordnung sehr einfach aufgebaut. Es ist keine Pistolenform erforderlich. Die Übertragungsmittel in Form einer schlichten Schnur oder eines Drahtes können einfach montiert werden und sind kostengünstig verfügbar. Die Lage des Gelenks zwischen Stil und Schlaggitter erfordert nur einen kurzen Weg des Schlaggitters. Dadurch verstreicht weniger Zeit, bis das Insekt getroffen wird, die nicht ausreicht um die Flucht zu ergreifen.

Vorzugsweise ist vorgesehen, dass das Gelenk einen Kopf umfasst, der fest mit dem Stil verbunden ist, und zumindest ein Band, welches an dem Kopf vorgesehen ist und mit einem Lager zusammenwirkt, das fest mit dem Schlaggitter verbunden ist. Der Kopf kann mit einer Masse versehen werden, die größer ist, als die Masse des Schlaggitters. Entsprechend kann der Kopf die Kräfte gut aufnehmen. Der Stil darf dann schlank ausgeführt werden. Auf diese Weise ist die Verwendung von kostengünstigem Kunststoff möglich.

Insbesondere kann eine Gelenkstange in dem Lager gelagert sein, durch welche das wenigstens eine Band drehbeweglich geführt ist. Die Feder kann eine Spiralfeder sein. Die Spiralfeder kann um die Gelenkstange herum angeordnet sein. Es ist aber auch möglich andere Mittel zur Erzeugung einer Vorspannung zu verwenden.

Eine besonders einfache und kostengünstige Ausgestaltung der Erfindung sieht vor, dass die Spiralfeder aus Draht gefertigt ist und der Draht in der Verlängerung lineare Drahtabschnitte bildet, welche in Nuten in dem Schlaggitter aufgenommen sind. Die Kräfte beim Zurückschnellen des Schlaggitters durch die Federkraft werden dann gleichmäßig auf das Schlaggitter übertragen. Das Schlaggitter selber braucht nur geringe Kräfte oder keine Kräfte übertragen.

Eine besonders vorteilhafte Lösung sieht vor, dass das Schlaggitter Stege aufweist, die einen tropfenförmigen oder anderen aerodynamisch optimierten Querschnitt haben, derart, dass der bei der Rotation des Schlaggitters erzeugte Luftzug im Bereich des zu treffenden Insekts minimiert wird. Dadurch bemerkt das Insekt das nahende Schlaggitter erst sehr spät und kann nicht mehr fliehen.

Eine weitere Ausgestaltung der Erfindung sieht vor, dass der Stil ein in der Länge veränderlicher Teleskop-Stil ist. Bei der Verlängerung braucht nur die Schnur oder der Draht am Auslöser verlängert werden. Es ist aber auch möglich, einen Teil des Stils als verlängerbaren Handgriff auszubilden. Dann bleibt die Länge der Schnur oder des Drahtes gleich. Mit einem längeren Stil oder einem längeren Handgriff können auch entfernte Insekten erreicht werden.

Die Arretiermittel können einen Haken oder ein Rastelement umfassen, in den der Rand des Schlaggitters unter Vorspannung der Feder lösbar einrastbar ist. Durch einfaches Zurückziehen des Hakens oder Rastelements wird das Schlaggitter freigegeben.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Verein Deutscher Ingenieure, dargelegt sind. Insbesondere haben die verwendeten Begriffe nicht die gegenteilige Bedeutung dessen, was der Fachmann den obigen Publikationen entnimmt.

### Kurze Beschreibung der Zeichnungen

- Fig.1: ist eine perspektivische Darstellung einer Fliegenklatsche in entspanntem Zustand.
- Fig.2: ist eine perspektivische Darstellung der Fliegenklatsche aus Figur 1 in vorgespanntem Zustand.
- Fig.3: zeigt ein Detail aus Figur 2, in dem zu erkennen ist, wie das Schlaggitter der Fliegenklatsche unter Vorspannung am Griff gehalten wird.
- Fig.4: zeigt ein Detail aus Figur 1 mit Schlaggitter, Feder, Scharnier, und einem Teil des Griffs.
- Fig.5: entspricht der Darstellung in Figur 4, aber mit freigelegtem Scharnier.
- Fig.6: zeigt das Schlaggitter mit Feder separat.
- Fig.7: zeigt die Feder für eine Fliegenklatsche nach Figur 1 separat.
- Fig.8: zeigt das Schlaggitter ohne Feder für eine Fliegenklatsche nach Figur 1 separat.
- Fig.9: ist ein vergrößertes Detail des Schlaggitters aus Figur 8, in dem die aerodynamische Form der Gitterstege erkennbar ist.

### Beschreibung des Ausführungsbeispiels

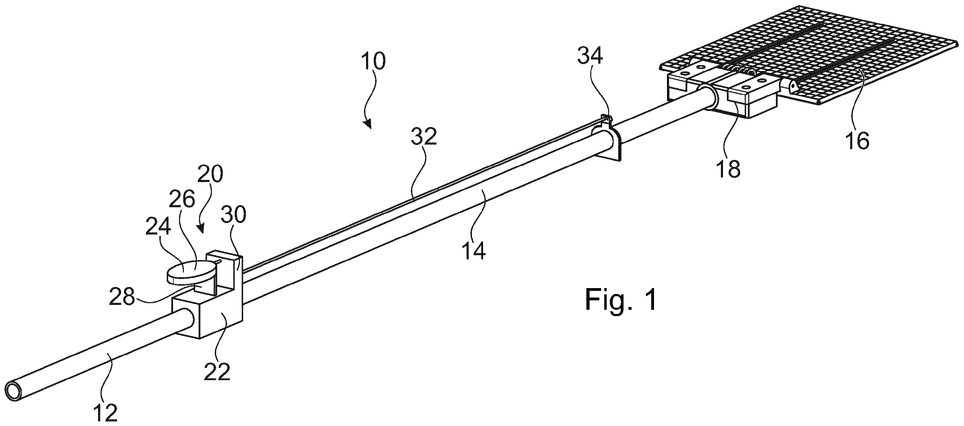

Figur 1 zeigt eine allgemein mit 10 bezeichnete Fliegenklatsche. Die Fliegenklatsche 10 umfasst einen Handgriff 12, einen Stiel 14 und ein Schlaggitter 16. Der Handgriff 12 fluchtet mit dem Stiel 14 und ist wie der Stiel im Wesentlichen stabförmig ausgebildet. Das Schlaggitter 16 ist auf nachstehend beschriebene Weise an den Stiel 14 angelenkt. Die Rotationsachse des hierfür vorgesehenen Gelenks 18 verläuft in der Ebene des Schlaggitters 16 senkrecht zur Längsachse des Stiels 14.

Zwischen Handgriff 12 und Stiel 14 ist ein Auslöser 20 an den den Handgriff 12 und den Stiel 14 bildenden Stab angeformt. Der Auslöser 20 umfasst eine verbreiterte Basis 22. Auf der Basis 22 ist ein Winkel 24 befestigt. Der Winkel 24 weist einen ersten Schenkel 26 parallel zur Längsachse des Stiels 14 auf, der eine Aufdrückfläche bildet. Ein zweiter Schenkel 28 des Winkels 24 erstreckt sich senkrecht dazu und verbindet den ersten Schenkel 26 mit der Basis 22.

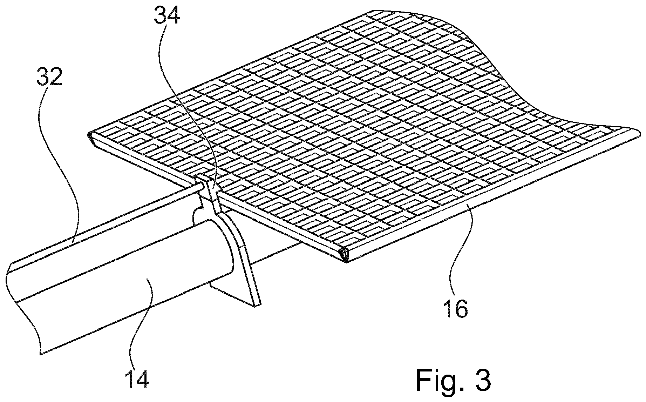

Die Basis 22 ist gewinkelt ausgebildet und weist einen senkrecht zum Stil 14 verlaufenden Vorsprung 30 auf. Durch den Vorsprung 30 ist ein Draht oder eine Schnur 32 geführt. Ein Ende der Schnur 32 ist an dem Winkel 24 befestigt. Das andere Ende der Schnur 32 ist an einem Haken 34 befestigt. Der Haken 34 bildet ein Rastelement und ist kurz vor dem Ende des Stiels 14 vorgesehen. Er erstreckt sich nach oben in Figur 1. Der Haken 34 ist in Figur 3 noch einmal im Detail dargestellt.

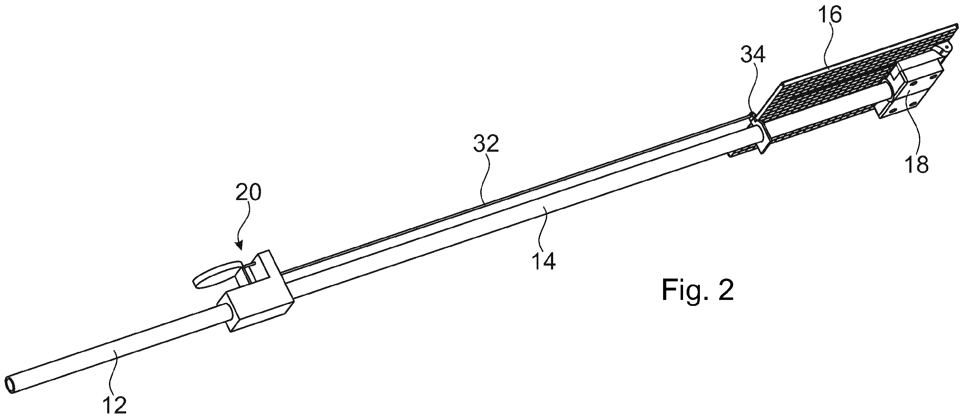

Wenn auf die Aufdrückfläche des Auslösers 20 Druck nach unten in Figur 1 ausgeübt wird, bewegt sich der Schenkel 26 nach unten und zieht an der Schnur 32. Dann wird der obere Teil des Hakens 34 nach hinten in Richtung des Auslösers 20 bewegt. Mit dem Haken 34 kann das Schlaggitter 16 in einer vorgespannten Stellung gehalten werden, bis der Auslöser 20 betätigt wird. Die vorgespannte Stellung ist in Figur 2 und Figur 3 dargestellt. Man erkennt, dass das Schlaggitter 16 um einen Winkel von etwa 180° in Richtung des Handgriffs 12 rotiert und in dieser Lage mit dem Haken 34 fixiert wurde.

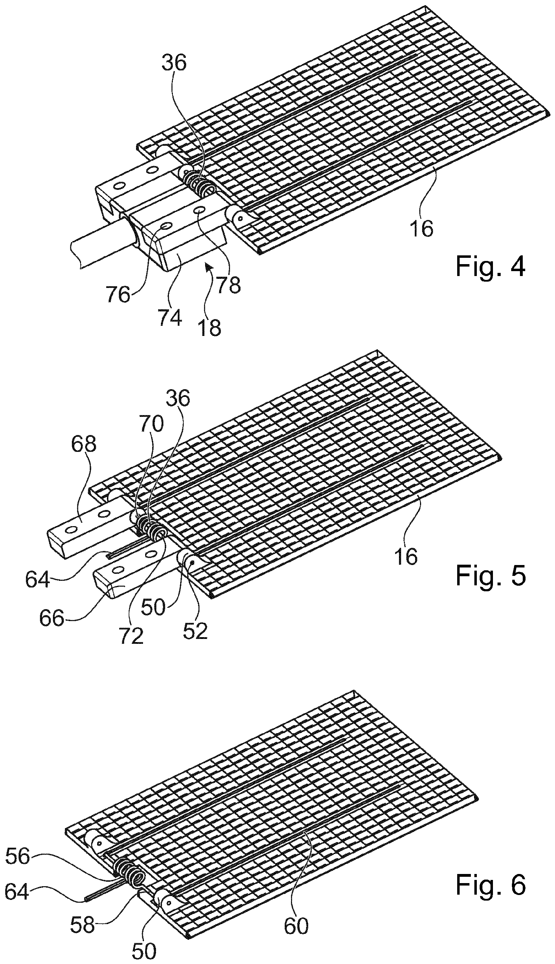

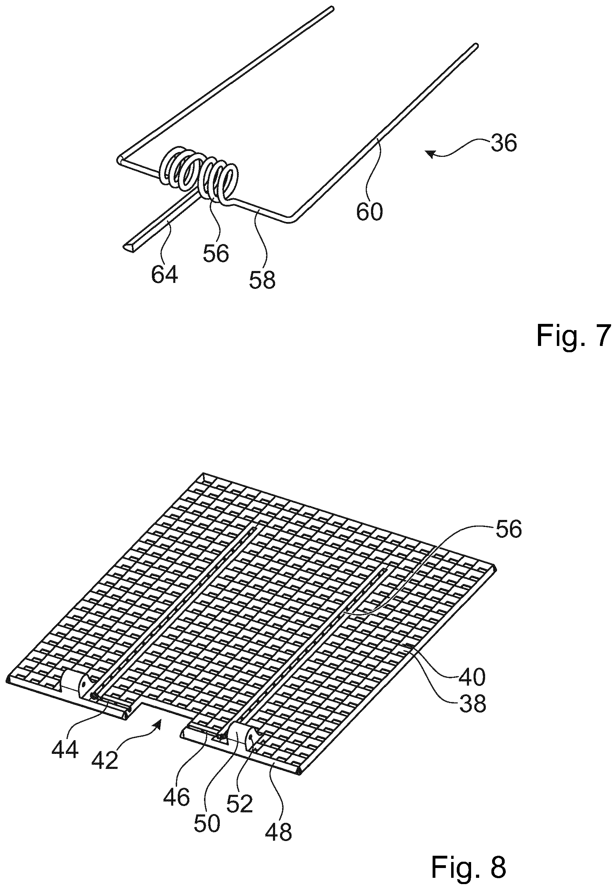

Figur 4 zeigt das Schlaggitter 16 mit Feder 36 und Gelenk 18 im Detail. Das Schlaggitter 16 ist ein Kunststoff-Formteil, das in Figur 8 noch einmal separat dargestellt ist. Das Schlaggitter 16 bildet ein flächenhaftes, rechteckiges Gitter mit rechtwinklig zueinander angeordneten Stegen 38 und 40. Die Stege 40 verlaufen in Stilrichtung. Die Stege 38 quer dazu. Die Abstände sind in der für Fliegenklatschen üblichen Weise so bemessen, dass die zu tötenden Insekten sicher erfasst werden, aber genügend Luft durch die dazwischen gebildeten Lücken strömt, dass das Insekt die nahende Schlagfläche erst spät bemerkt.

Das Schlaggitter 16 hat auf der dem Stiel 14 zugewandten Seite eine Aussparung 42. Von der Aussparung 42 sind zwei langgestreckte Nuten 44 und 46 vorgesehen. Die Nuten 44 und 46 verlaufen zunächst parallel zum Rand 48. Der überwiegende Teil 54 der Nuten 44 und 46 verläuft rechtwinklig zum Rand 48 über einen großen Teil des Schlaggitters 16. Beidseitig der Aussparung 42 und dem kurzen Teil der Nuten 44 und 46 ist jeweils ein Vorsprung 50 mit einer Bohrung 52 vorgesehen. Die Vorsprünge 50 mit den Bohrungen 52 bilden einen ersten Teil des nachstehend beschriebenen Scharniers 18.

In den Nuten 44 und 46 ist die Feder 36, wie in Figur 6 dargestellt, aufgenommen. Die Feder 36 ist in Figur 7 separat dargestellt. Die Feder 36 besteht aus einem Draht, der einen spiralförmigen Mittelteil 56 aufweist. Dieser sitzt in der Aussparung 42, wie dies in Figur 6 gut zu erkennen ist. An den spiralförmigen Mittelteil 56 schließen sich auf jeder Seite lineare Drahtabschnitte 58 und 60 an. Die linearen Drahtabschnitte 58 und 60 bilden einen Winkel und sind so bemessen, dass sie genau in den Nuten 44 und 46 aufgenommen sind. Dies ist in Figur 6 gut zu erkennen. Der spiralförmige Mittelteil 56 mündet mittig in einer Verlängerung 64, welche zur Befestigung am Stil 14 dient. Hierfür sind zwei Bohrungen vorgesehen, in welche die Enden gesteckt werden.

Figur 4 und Figur 5 illustrieren, wie das Schlaggitter 16 mit der Feder 36 an den Stiel 14 angelenkt werden. Zwei Bänder 66 und 68 mit jeweils einer Bohrung 70 im Schlaggitterseitigen Teil werden so in den Bereich zwischen Aussparung 42 und Vorsprung 50 eingesetzt, dass die Bohrungen 52 und 70 fluchten. Eine Gelenkstange 72 ist durch die Bohrungen 52 und 70 geführt. Die Bänder 66 und 68 liegen auf den linearen Drahtabschnitten in den Nuten 44 und 46 auf und halten die Feder 36 so in ihrer Lage.

Die Bänder 66 und 68 sind im wesentlichen quaderförmig und ebenfalls aus Kunststoff gefertigt. Die Bänder 66 und 68 weisen jeweils zwei Bohrungen 76 und 78 auf, über welche sie mit einem Kopf 74 verstiftet oder verschraubt sind. Auch der Kopf 74 ist aus Kunststoff gefertigt. Der Kopf 74 ist mit einer Bohrung auf das Stielende des Stiels 14 aufgesteckt und dort eingeklemmt oder auf andere Weise fixiert. Auf diese Weise ist das Schlaggitter 16 drehbeweglich an dem Stil 14 befestigt.

Der spiralförmige Mittelteil 56 der Feder 36 drückt das Schlaggitter in eine entspannte Stellung, die in Figur 1 gezeigt ist. Dabei wird die Kraft über die linearen Abschnitte 60 auf die Länge des gesamten Gitters 16 übertragen. Der Kunststoff wird also nur wenig belastet. Das Schlaggitter 16 kann gegen die Federkraft der Feder 36 um einen Winkel von 180° rotiert werden. Das vorgespannte Schlaggitter 16 kann an dem Haken 34 eingerastet und in dieser Lage fixiert werden. Durch Betätigen des Auslösers 20 wird der Haken 34 gelöst und das Schlaggitter 16 schnappt von der vorgespannten Lage in Figur 2 in die entspannte Lage, die in Figur 1 gezeigt ist.

Die Bewegung des Schlaggitters 16 ist ähnlich wie bei einer Mausefalle durch die Drahtfeder 36 verursacht. Entsprechend schnell wird die Bewegung ausgeführt. Die Betätigung des Auslösers 20, die ebenfalls eine kleine Bewegung, nämlich durch die Hand, erfordert, wird etwas entfernt zur Bewegung des Schlaggitters 16 ausgeführt. Das Insekt wird also durch diese vorhergehende Bewegung aufgrund des Abstands nicht gewarnt.

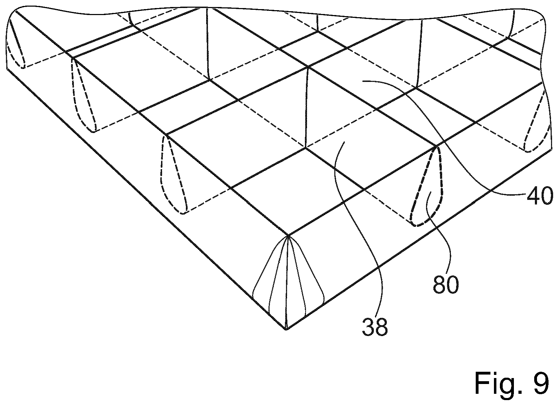

Das Schlaggitter 16 ist aus Kunststoff gefertigt. Dies erlaubt eine Gitterform, die in Figur 9 dargestellt ist. Die Stege 38 und 40 haben einen tropfenförmigen Querschnitt 80. Die Stege 38 und 40 laufen also in Schlagrichtung in aerodynamisch besonders vorteilhafter Weise spitz zu. Das Ende entgegen der Schlagrichtung ist abgerundet. Dadurch wird die Luft in der Weise verwirbelt, dass das Insekt den Luftzug, der mit der Bewegung des Schlaggitters 16 einhergeht, erst spät bemerkt und nicht mehr fliehen kann.

Ein weiterer Vorteil der Anordnung ist es, dass das Schlaggitter 16 an einem vergleichsweise massiven Kopf 74 mit vergleichsweise massiven Bändern 66 und 68 gelagert ist. Dieser kann die übertragenen Kräfte gut aufnehmen. Entsprechend darf der übrige Teil der Fliegenklatsch, nämlich Handgriff 12, Stiel 14 und Auslöser 20 mit wenig Materialverbrauch ausgeführt sein. Eine pistolenartige Anordnung, wie sie aus dem Stand der Technik bekannt ist, ist nicht erforderlich. Die gesamte Anordnung ist besonders einfach aufgebaut und kann bis auf die Feder und die Schnur aus kostengünstigem Kunststoff gefertigt werden.

Bei einem nicht dargestellten Ausführungsbeispiel ist der Stiel 14 als Teleskop-Stiel ausgebildet, welcher verlängerbar ist. Dadurch wird es auch möglich, Insekten an weiter entfernten Orten, etwa im oberen Bereich einer Wand, zu erreichen.

## Patentansprüche

1. Fliegenklatsche (10) mit einem Schlaggitter (16) und einem Stiel (14), wobei
(a) das Schlaggitter (16) mit einem Gelenk an den Stiel (14) angelenkt ist;
(b) das Schlaggitter (16) gegen die Kraft einer Feder (36) von einer entspannten Position um eine Achse drehbar ist, welche in der Ebene des Schlaggitters (16) liegt und senkrecht zur Längsachse des Stils (14) verläuft;
(c) das Schlaggitter (16) mit einer Arretiereinrichtung in vorgespannter Lage arretierbar ist, und
(d) die Arretierung der Arretiereinrichtung (34) mit einem Auslöser (20) lösbar ist,
(e) das Gelenk mit der Drehachse des Schlaggitters zwischen Stil und Schlaggitter (16) angeordnet ist;
(f) die Arretiereinrichtung (34) beabstandet zum Auslöser (20) angeordnet ist; und
(g) eine Schnur, ein Draht oder andere Übertragungsmittel (32) vorgesehen sind, welche eine auslösende Kraft vom Auslöser (20) auf die Arretiereinrichtung (34) übertragen
**dadurch gekennzeichnet, dass**
(h) das Schlaggitter (16) Stege aufweist, die einen tropfenförmigen Querschnitt haben, derart, dass der bei der Rotation des Schlaggitters (16) erzeugte Luftzug im Bereich des zu treffenden Insekts minimiert wird.

2. Fliegenklatsche nach Anspruch 1, **dadurch gekennzeichnet, dass** das Gelenk einen Kopf (74) umfasst, der fest mit dem Stil (14) verbunden ist, und zumindest ein Band (66, 68), welches an dem Kopf (74) vorgesehen ist und mit einem Lager (50) zusammenwirkt, das fest mit dem Schlaggitter (16) verbunden ist.

3. Fliegenklatsche nach Anspruch 2, **dadurch gekennzeichnet, dass** eine Gelenkstange in dem Lager (50) gelagert ist, durch welche das wenigstens eine Band (66, 68) drehbeweglich geführt ist.

4. Fliegenklatsche nach einem der vorgehenden Ansprüche, **dadurch gekennzeichnet, dass** die Feder (16) eine Spiralfeder ist.

5. Fliegenklatsche nach Anspruch 4, **dadurch gekennzeichnet, dass** die Spiralfeder (36) aus Draht gefertigt ist und der Draht in der Verlängerung lineare Drahtabschnitte (58, 60) bildet, welche in Nuten (44, 46, 56) in dem Schlaggitter (16) aufgenommen sind.

6. Fliegenklatsche nach einem der vorgehenden Ansprüche, **dadurch gekennzeichnet, dass** das Schlaggitter (16) aus Kunststoff gefertigt ist.

7. Fliegenklatsche nach einem der vorgehenden Ansprüche, **dadurch gekennzeichnet, dass** der Stil (14) ein in der Länge veränderlicher Teleskop-Stil ist.

8. Fliegenklatsche nach einem der vorgehenden Ansprüche, **dadurch gekennzeichnet, dass** die Arretiermittel einen Haken (34) oder ein Rastelement umfassen, in den der Rand des Schlaggitters (16) unter Vorspannung der Feder (36) lösbar einrastbar ist.

## Claims

1. Fly swatter (10) with a hitting grid (16) and a stem (14), wherein
(a) the hitting grid (16) is joint to the stem (14) by means of a joint;
(b) the hitting grid (16) is rotatable against the force of a spring (36) from a relaxed position about an axis which lies in the plane of the hitting grid (16) and runs perpendicularly to the longitudinal axis of the stem (14);
(c) the hitting grid (16) is lockable in a pre-loaded position with a locking device, and
(d) the locking mechanism of the locking device (34) is releasable by way of a trigger (20),
(e) the joint with a rotational axis of the hitting grid is provided between the stem and the hitting grid (16);
(f) the locking device (34) is provided remote to the trigger (20); and
(g) a string, a wire or any other means of transmission (32) is provided, which transfer a triggering force from the trigger (20) to the locking device (34);
**characterized in that**
(h) the hitting grid (16) provides webs which have a drop-shaped cross-section, such that the draft generated by the rotation of the hitting grid (16) is minimized in the range of the insect which is to be hit.

2. Fly swatter according to claim 1, **characterized in that** the joint comprises a head (74) which is firmly connected to the stem (14) and at least one hinge (66, 68) which is provided at the head (74) and cooperates with a bearing (50) which is firmly connected to the hitting grid (16).

3. Fly swatter according to claim 2, **characterized in that** a joint rod is accommodated in the bearing (50) through which the at least one hinge (66, 68) is rotatably led.

4. Fly swatter according to one of the preceding claims, **characterized in that** the spring (16) is a spiral spring.

5. Fly swatter according to claim 4, **characterized in that** the spiral spring (36) is manufactured from wire and the extension of the wire forms linear wire sections (58, 60) which are mounted in grooves (44, 46 56) in the hitting grid (16).

6. Fly swatter according to one of the preceding claims, **characterized in that** the hitting grid (16) is made of plastic.

7. Fly swatter according to one of the preceding claims, **characterized in that** the stem is a telescope stem (14) with variable length.

8. Fly swatter according to one of the preceding claims, **characterized in that** the locking means comprise a hook (34) or a latch element, adapted to releasably engage with the edge of the hitting grid (16) pre-loaded by the spring (36).

## Revendications

1. Tapette à mouches (10) munie d'une grille d'impact (16) et d'un manche (14) pour laquelle
(a) la grille d'impact (16) est articulée sur le manche (14) à l'aide d'une articulation ;
(b) la grille d'impact (16) peut tourner en s'opposant à la force d'un ressort (36) à partir d'une position détendue autour d'un axe qui se trouve dans le plan de la grille d'impact (16) et s'étend perpendiculairement à l'axe longitudinal du manche (14) ;
(c) la grille d'impact (16) peut être bloquée en position prétendue à l'aide d'un dispositif de blocage, et;
(d) le dispositif de blocage (34) peut se débloquer à l'aide d'un déclencheur (20),
(e) l'articulation est disposée avec l'axe de rotation de la grille d'impact entre le manche et la grille d'impact (16) ;
(f) le dispositif de blocage (34) est disposé en étant espacé du déclencheur (20) ; et
(g) il est prévu une ficelle, un fil de fer ou tout autre moyen de transmission (32) qui transmet au dispositif de blocage (34) une force de déclenchement du déclencheur (20),
**caractérisée en ce que**
(h) la grille d'impact (16) présente des nervures qui possèdent une section transversale en forme de goutte de sorte que le courant d'air généré lors de la rotation de la grille d'impact (16) est minimisé dans la zone de l'insecte à toucher.

2. Tapette à mouches selon la revendication 1, **caractérisée en ce que** l'articulation comprend une tête (74) solidaire du manche (14) et une attache ou plus (66, 68) prévue sur la tête (74) et coopérant avec un palier (50) solidaire de la grille d'impact (16).

3. Tapette à mouches selon la revendication 2, **caractérisée en ce qu'**une tige articulée permettant de guider l'attache ou plus (66, 68) de manière rotative est logée dans le palier (50).

4. Tapette à mouches selon l'une quelconque des revendications précédentes, **caractérisée en ce que** le ressort (16) est un ressort hélicoïdal.

5. Tapette à mouches selon la revendication 4, **caractérisée en ce que** le ressort hélicoïdal (36) est fabriqué en fil métallique et le fil métallique forme dans son prolongement des sections de fil métallique (58, 60) linéaires qui sont logées dans des rainures (44, 46, 56) de la grille d'impact (16).

6. Tapette à mouches selon l'une quelconque des revendications précédentes, **caractérisée en ce que** la grille d'impact (16) est fabriquée en plastique.

7. Tapette à mouches selon l'une quelconque des revendications précédentes, **caractérisée en ce que** le manche (14) est un manche télescopique modifiable en longueur.

8. Tapette à mouches selon l'une quelconque des revendications précédentes, **caractérisée en ce que** les moyens de blocage comprennent un crochet (34) ou un élément à crans dans lequel le bord de la grille d'impact (16) peut venir mordre de manière amovible lorsque le ressort (36) est prétendu.
